(19) Europäisches Patentamt
European Patent Office
Office européen des brevets

(11) Numéro de publication: **0 024 232**
**A1**

(12) # DEMANDE DE BREVET EUROPEEN

(21) Numéro de dépôt: **80401143.5**

(22) Date de dépôt: **01.08.80**

(51) Int. Cl.³: **G 06 F 7/50**

(30) Priorité: **10.08.79 FR 7920524**

(43) Date de publication de la demande: **25.02.81 Bulletin 81/8**

(84) Etats Contractants Désignés: **BE CH DE GB IT LI LU NL SE**

(71) Demandeur: **SEMS - SOCIETE EUROPEENNE DE MINI-INFORMATIQUE ET DE SYSTEMES**
**1, rue de Provence**
**F-38130 Echirolles(FR)**

(72) Inventeur: **Bolatre, Daniel**
**"THOMSON-CSF" SCPI 173, Boulevard Haussmann**
**F-75360 Paris Cedex 08(FR)**

(74) Mandataire: **Benoit, Monique et al,**
**"THOMSON-CSF" - SCPI 173, bld Haussmann**
**F-75360 Paris Cedex 08(FR)**

(54) **Dispositif additionneur et soustracteur, comportant au moins un opérateur binaire, et opérateur décimal comportant un tel dispositif.**

(57) La présente invention a pour objet un dispositif réalisant notamment l'addition et la soustraction de nombres décimaux.

Ce dispositif comporte autant de sous-ensembles (B) que les nombres décimaux comportent de chiffres. Chacun de ces sous-ensembles comporte un opérateur binaire (OB) recevant deux chiffres décimaux ($0_1$, $0_2$) codés en binaire et réalisant addition et soustraction bit à bit de ces chiffres d'entrée, et une mémoire morte (M) recevant le chiffre (S) fourni par l'opérateur binaire (OB) précédent et fournissant pour chacun de ceux-ci et sur commande extérieur ($C_1$, $C_2$), une valeur (R) qui est le résultat de l'opération considérée, exprimée soit sous forme binaire, soit sous forme d'un code décimal prédéfini.

Ce dispositif est applicable notamment à la réalisation d'un opérateur décimal.

./...

EP 0 024 232 A1

FIG_1

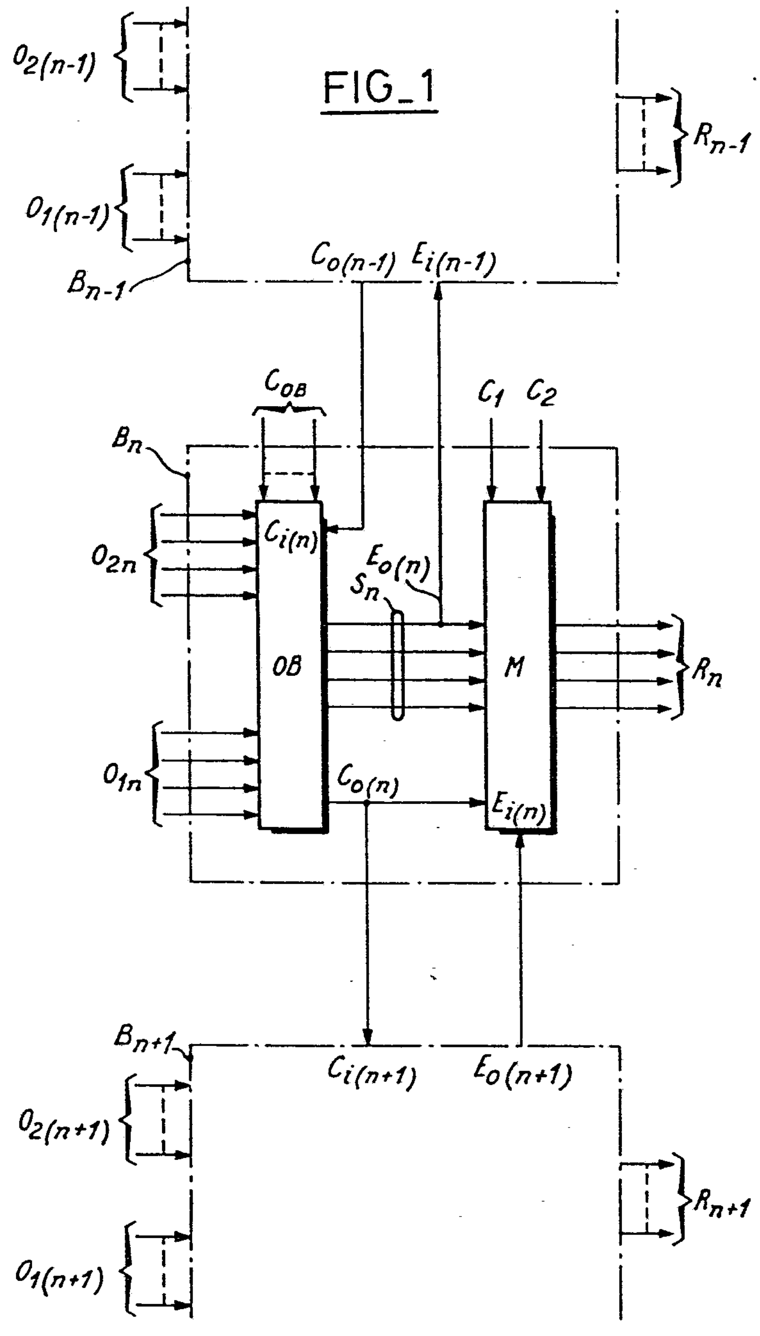

O2(n-1)
O1(n-1)
Bn-1
Co(n-1)
Ei(n-1)
Rn-1
COB
C1
C2
Bn
O2n
Ci(n)
Eo(n)
Sn
OB
M
Rn
O1n
Co(n)
Ei(n)
Bn+1
Ci(n+1)
Eo(n+1)
O2(n+1)
O1(n+1)
Rn+1

# DISPOSITIF ADDITIONNEUR ET SOUSTRACTEUR, COMPORTANT AU MOINS UN OPERATEUR BINAIRE, ET OPERATEUR DECIMAL COMPORTANT UN TEL DISPOSITIF

La présente invention a pour objet un dispositif additionneur et soustracteur de nombres binaires ou décimaux, comportant au moins un opérateur binaire. L'invention a également pour objet un opérateur décimal, comportant un tel dispositif additionneur et soustracteur.

On connaît de nombreux circuits électroniques qui réalisent l'addition et la soustraction de nombres binaires, mais seulement de nombres binaires. Par ailleurs, on connaît également des circuits réalisant addition et soustraction de nombres décimaux, mais en général encore seulement de nombres décimaux. Dans les deux cas, l'obtention du résultat sous une autre forme nécessite une conversion en sortie du dispositif.

La présente invention a pour objet un dispositif de réalisation simple, permettant notamment d'additionner ou de soustraire des nombres qui soient exprimés sous forme binaire ou codés en décimal, selon un certain nombre de codes prédéfinis.

A cet effet, ce dispositif comporte au moins un opérateur susceptible de réaliser une addition ou une soustraction bit à bit de chiffres d'entrée, ceux-ci étant exprimés à l'aide d'un nombre déterminé (m) de bits, et au moins une mémoire et qui fournit, sur commande extérieure, pour chaque suite de bits en provenance de l'opérateur binaire précédent, une valeur qui est le résultat de l'opération considérée, addition ou soustraction par exemple, exprimée sous forme binaire ou sous forme de l'un des codes décimaux précédents.

L'invention a également pour objet un opérateur décimal comportant un tel dispositif additionneur et soustracteur.

D'autres objets, caractéristiques et résultats de l'invention ressortiront de la description suivante, donnée à titre d'exemple non limitatif et illustrée par les dessins annexés, qui représentent :

- la figure 1, le schéma général d'un mode de réalisation du dispositif selon l'invention ;

- la figure 2, le contenu des mémoires utilisées dans le dispositif selon l'invention ;

- la figure 3, un tableau indiquant certaines des fonctions qui sont réalisées par le dispositif selon l'invention.

Sur ces différentes figures, les mêmes références se rapportent aux mêmes éléments.

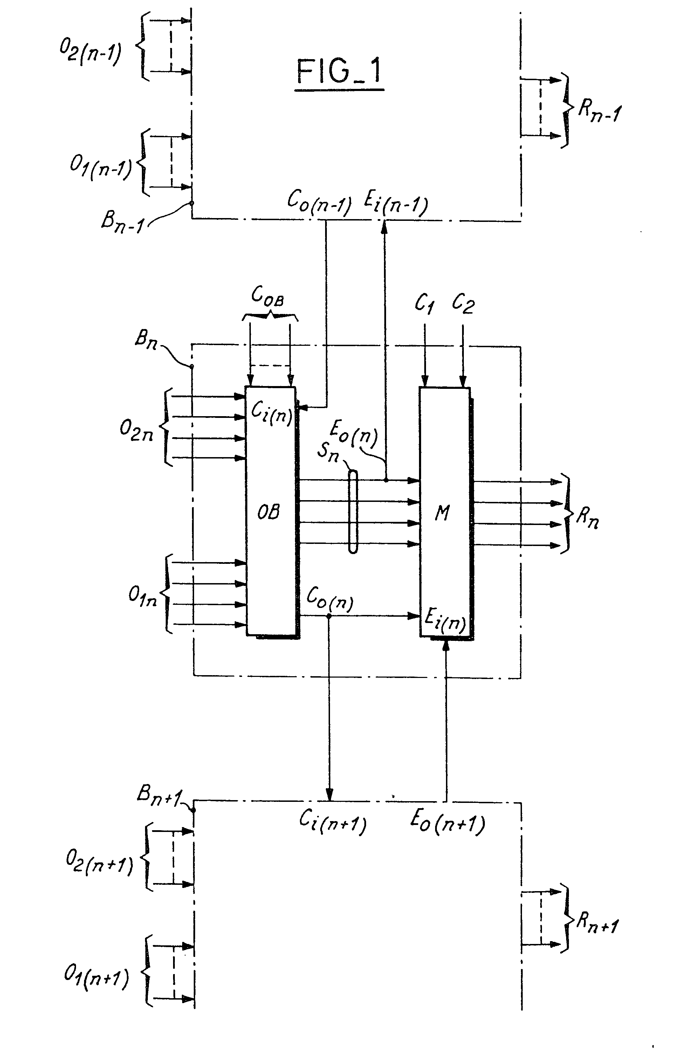

Sur la figure 1, on a représenté un opérateur binaire OB qui reçoit deux chiffres décimaux $0_{1n}$ et $0_{2n}$ appartenant respectivement à deux nombres décimaux. Ces chiffres décimaux sont exprimés en binaire selon un code défini ; à titre d'exemple, le dispositif selon l'invention est décrit ci-après pour le traitement de nombres décimaux codés selon le codage DN (pour Décimal Normal) ou selon le codage DT (pour Décimal Transcodé). Dans le premier type de codage (DN), les chiffres décimaux sont représentés par leur valeur dans la base 2 et sont donc exprimables à l'aide de $m = 4$ bits, comme illustré sur les figures. Dans le codage DT, les chiffres décimaux sont représentés par leur valeur en base 2 augmentée de 3 ; le résultat est également exprimable sur $m = 4$ bits.

L'opérateur binaire reçoit également des commandes $C_{OB}$ qui seront décrites plus loin. En fonction des chiffres $0_1$ et $0_2$ et des commandes $C_{OB}$ reçues, l'opérateur binaire OB fournit d'une part un chiffre $S_n$ de sortie sur m bits, qui est le résultat de l'opération demandée par les commandes $C_{OB}$, et d'autre part l'indication d'une éventuelle retenue $C_{0(n)}$.

A titre d'exemple, l'opérateur binaire OB peut être constitué par un circuit électronique fabriqué par la Société TEXAS-INSTRUMENTS sous la référence 74 S 181.

Le chiffre $S_n$ est transmis à une mémoire M. La mémoire M reçoit par ailleurs l'indication de la retenue $C_{0(n)}$ ainsi que des commandes $C_1$ et $C_2$ et une entrée $E_{i(n)}$. L'ensemble de ces indications constitue une adresse (sur huit bits) de la mémoire M à laquelle se trouve une valeur $R_n$, que la mémoire M fournit en réponse.

L'opérateur binaire OB et la mémoire M appartiennent tous les deux à un même sous-ensemble noté $B_n$, qui donc fournit à partir de deux chiffres $0_{1n}$ et $0_{2n}$ un résultat $R_n$, l'indice n caractérisant le sous-ensemble. Le dispositif selon l'invention comporte une pluralité de tels sous-ensembles : autant de sous-ensembles que les nombres à traiter par le dispositif comportent de chiffres. A titre d'exemple, on a schématisé sur la figure deux autres sous-ensembles appelés $B_{n-1}$ et $B_{n+1}$ se situant, dans la chaîne, de part et d'autre du sous-ensemble $B_n$. Chacun de ces sous-ensembles reçoit deux chiffres décimaux exprimés sur m = 4 bits ($0_{1(n-1)}$ et $0_{2(n-1)}$ pour $B_{n-1}$, $0_{1(n+1)}$ et $0_{2(n+1)}$ pour $B_{n+1}$) et fournit un résultat ($R_{n-1}$ et $R_{n+1}$ respectivement) sur le même nombre de bits. Les interconnexions entre les sous-ensembles B sont réalisées de la façon suivante :

- la retenue d'un sous-ensemble est dirigée vers l'étage suivant, c'est-à-dire que la retenue $C_{0(n-1)}$ de $B_{n-1}$ est dirigée vers $B_n$, où elle est désignée par $C_{i(n)}$ et ajoutée à $0_{2n}$ par exemple, et la retenue $C_{0(n)}$ de $B_n$ est dirigée vers $B_{n+1}$, où elle est désignée $C_{i(n+1)}$, etc...
- le bit de poids le moins fort ($E_o$) du nombre S fourni par l'opérateur binaire OB constitue l'entrée $E_i$ du sous-ensemble précédent : le bit $E_{o(n)}$ de $B_n$ est fourni à l'entrée $E_{i(n-i)}$ de $B_{n-1}$ ; le bit $E_{o(n+1)}$ est fourni à l'entrée $E_{i(n)}$ de $B_n$, etc...

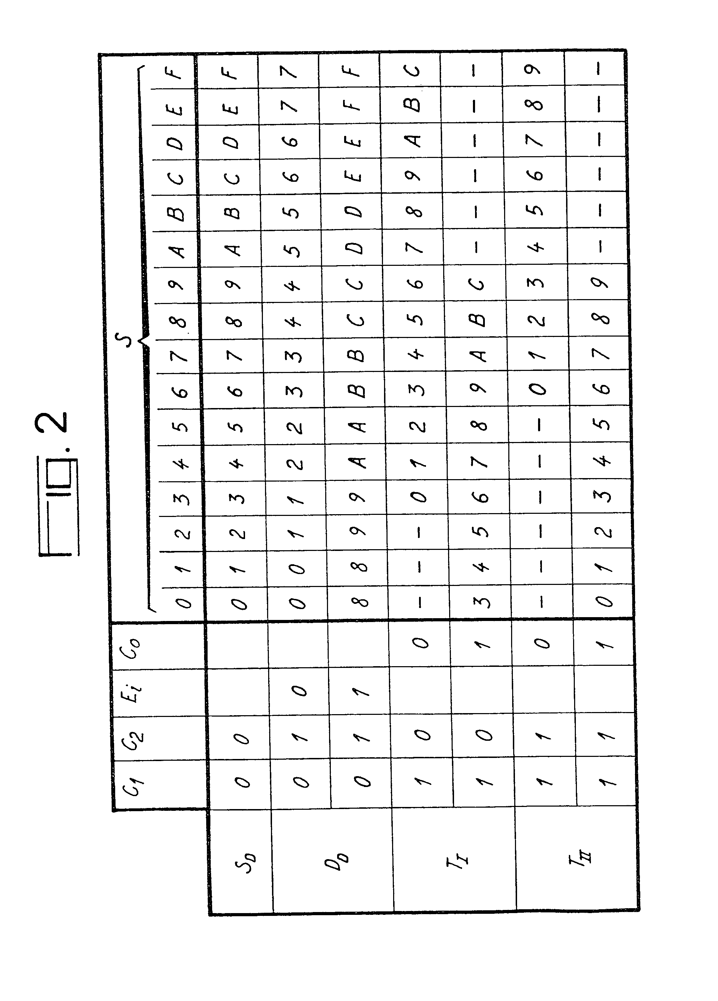

La figure 2 illustre un contenu possible pour la mémoire M, c'est-à-dire la valeur de R se trouvant à l'adresse constituée par les informations $C_1$, $C_2$, E, $C_0$ et S. Par souci de simplification, les valeurs de R et de S sont représentées sous forme héxadécimale.

La mémoire M est de préférence une mémoire morte (ou mémoire à lecture seule ou ROM) d'une capacité minimale de 1024 bits.

On a représenté, à titre d'exemple, quatre modes de fonctionnement possibles pour la mémoire M, à savoir sortie directe ($S_D$), décalage à droite ($D_D$), transcodages de type I ($T_I$) et de type II ($T_{II}$). Ces quatre modes de fonctionnement sont différenciés à l'aide des

bits de commande $C_1$ et $C_2$.

La première ligne du tableau de la figure 2 représente le premier mode de fonctionnement, $S_D$, dans lequel le résultat est désiré sous forme binaire, c'est-à-dire que le résultat R est identique à la sortie S de l'opérateur binaire. Ce mode de fonctionnement est par exemple caractérisé par $C_1 = 0$ et $C_2 = 0$ ; les valeurs de $E_i$ et de $C_0$ ne sont pas indiquées parce qu'elles sont indifférentes. On constate que les valeurs de R indiquées sur la première ligne du tableau sont identiques aux valeurs de S fournies par l'opérateur OB à la mémoire M.

Le deuxième mode de fonctionnement possible ($D_D$) correspond à un décalage d'une position binaire vers la droite. Dans l'exemple de la figure, les valeurs correspondant pour $C_1$ et $C_2$ sont respectivement 0 et 1. Les valeurs de R fournies par $C_2$ sont respectivement 0 et 1. Les valeurs de R fournies par la mémoire M ne sont pas ici les mêmes selon que le bit de poids le plus faible ($E_0$) de l'étage précédent est égal à 0 ou à 1. Le tableau de la figure 2 comporte à cet effet deux lignes :

- la première ligne correspondant au cas où le bit reçu sur l'entrée $E_i$ est égal à 0 ; la suite de la ligne indique les valeurs de R correspondant aux différentes valeurs de S : à titre d'exemple, pour $S = 5, R = 2$ ;
- la deuxième ligne de ce second mode de fonctionnement correspond au cas où le bit reçu sur l'entrée $E_i$ est égal à 1 ; à titre d'exemple, pour $S = 3, R = 9$.

Dans l'un et l'autre cas, la valeur de la retenue $C_0$ est indifférente.

Le troisième mode de fonctionnement indiqué sur le tableau de la figure 2 ($T_I$) correspond à un premier type de transcodage, pour lequel la valeur des bits de commande $C_1$ et $C_2$ est respectivement 1 et 0. Dans ce mode de fonctionnement, la valeur (R) fournie par la mémoire M dépend de l'existence d'une retenue ($C_0$) et la valeur du bit reçu sur l'entrée $E_i$ est indifférente. La première ligne de ce mode $T_I$ correspond à une valeur nulle de la retenue $C_0$ ; dans ce cas, le résultat R fourni par la mémoire est égal à $S-3$ ; pour les valeurs 0, 1 et 2 de S, cette opération n'est pas possible : c'est ce qui est indiqué par des tirets dans les cases correspondantes. Lorsque la retenue $C_D$ est égale à 1, la ligne suivante indique les valeurs correspondantes de R ; elles sont égales à S + 3 ; les valeurs A, B, C, D, E et F sont impossibles pour S dans ce cas, ce qui est indiqué par des tirets dans les cases correspondantes.

Le quatrième mode de fonctionnement, $T_{II}$, correspond à des bits de commande $C_1$ et $C_2$ égaux à 1. Comme pour $T_I$, la valeur du bit reçu sur l'entrée $E_i$ est indifférente mais la valeur de la retenue $C_0$ donne lieu à deux fonctionnements différents :

- lorsque la retenue $C_0$ est nulle, la valeur R fournie par la mémoire est égale à S - 6, ce qui est indiquée par l'avant dernière ligne du tableau ; par exemple pour S = 8, R = 2 ; pour S inférieur à 6, ce mode de fonctionnement n'est pas possible, ce qui est indiqué par les tirets dans les cases correspondantes ;
- lorsque la retenue $C_0$ est égale à 1, la valeur R est égale à celle S ; toutefois, les valeurs de S égales à A, B, C, D, E ne correspondent à aucun cas de fonctionnement réel, ce qui est indiqué par des tirets dans les cases correspondantes.

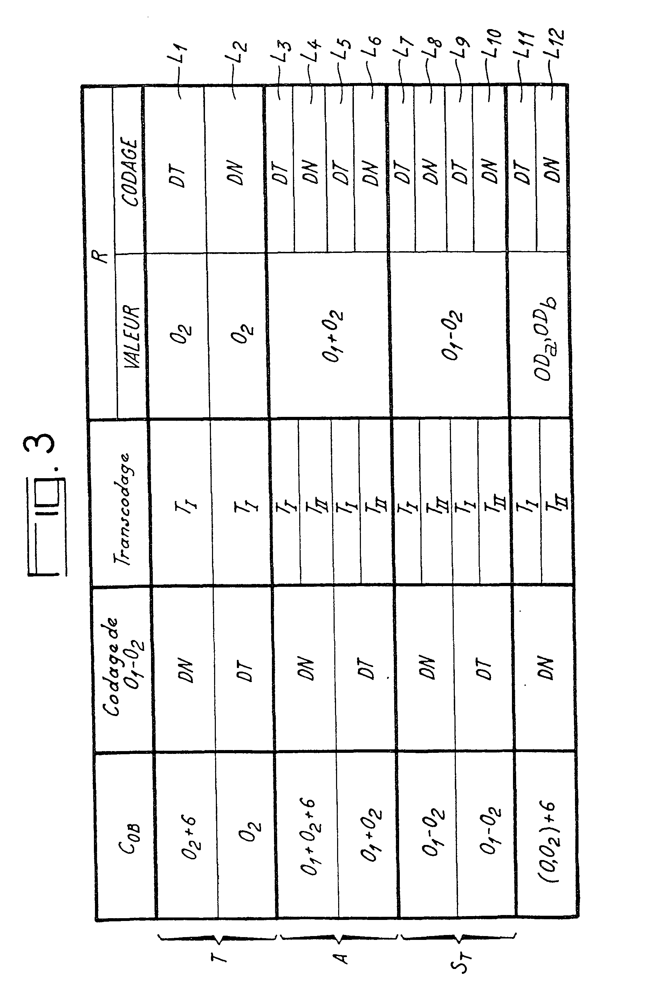

La figure 3 représente à titre d'exemple des fonctions qui sont réalisées par le dispositif selon l'invention en utilisant les modes de fonctionnement $T_I$ et $T_{II}$ particuliers décrits sur la figure 2.

La première colonne de ce tableau représente différentes fonctions qui peuvent être réalisées par l'opérateur binaire OB et qui sont sélectionnées par l'intermédiaire des commandes $C_{OB}$. A titre d'exemple, on a représenté sept de ces fonctions, ce qui peut être exprimé à l'aide de mots binaires de trois bits appliqués sur les entrées $C_{OB}$.

La deuxième colonne de ce tableau indique le mode de codage décimal dans lequel sont exprimés les chiffres d'entrée $0_1$ et $0_2$, pour chacune des fonctions précédentes.

La troisième colonne représente le mode de fonctionnement choisi pour la mémoire M, selon le tableau de la figure 2, pour chacune des fonctions précédentes.

Les dernières colonnes illustrent le résultat R obtenu dans chaque cas, la première colonne indiquant la valeur de ce résultat et la seconde, le codage dans lequel est exprimé le résultat.

Les deux premières lignes ($L_1$ et $L_2$) du tableau représentent des fonctions de transcodage (T) :

- la première ligne ($L_1$) représente un transcodage du décimal normal (DN) au décimal transcodé (DT). Pour cela, on fournit à l'opérateur OB un chiffre (par exemple $0_2$) exprimé en décimal normal (DN) et on lui ajoute 6. La mémoire M fonctionne alors en transcodage $T_I$ et le résultat obtenu est le chiffre initial ($0_2$) exprimé en codage DT.

- la deuxième ligne ($L_2$) de ce tableau représente un transcodage du décimal transcodé (DT) au décimal normal (DN) ; pour cela, l'opérateur binaire OB reçoit un chiffre ($0_2$) par exemple exprimé en décimal transcodé (DT) ; le résultat (S) de l'opération est fourni à la mémoire M qui fonctionne en transcodage $T_1$ et le résultat obtenu à la sortie de la mémoire est le chiffre initial ($0_2$) mais exprimé en décimal normal (DN).

Le dispositif fonctionne également en additionneur, ce qui est représenté dans les lignes suivantes ($L_3$ à $L_6$) du tableau de la figure 3, repérées globalement A.

La première ligne ($L_3$) illustre le cas où les deux chiffres $0_1$ et $0_2$ sont exprimés en décimal normal (DN). Dans ce cas, l'opération s'effectue en deux phases. Au cours de la première phase, il est ajouté 6 au chiffre $0_1$, (ou $0_2$) ; l'opérateur OB est utilisé en additionneur binaire et la mémoire M en mode sortie directe $S_D$. Puis lors de la seconde phase l'autre chiffre d'entrée $0_2$ (ou $0_1$) est ajouté au résultat précédent. Selon le transcodage opéré par la mémoire M ($T_I$ ou $T_{II}$), le tableau de la figure 3 montre que le résultat obtenu est la somme des chiffres $0_1 + 0_2$ exprimée soit en décimal transcodé (ligne $L_3$) soit en décimal normal ($L_4$).

Lorsque les chiffres $0_1$ et $0_2$ sont exprimés en décimal transcodé (DT), la commande $C_{OB}$ est telle que soit réalisée par l'opérateur OB la simple addition de $0_1 + 0_2$ ; selon que le trans-

codage opéré par la mémoire M est du type $T_I$ (ligne $L_5$) ou $T_{II}$ (ligne $L_6$), le résultat $0_1 + 0_2$ est obtenu en codage DT ou DN, respectivement.

Une autre fonction qu'est susceptible de réaliser le dispositif selon l'invention est la soustraction ($S_T$) $0_1 - 0_2$. Lorsque les chiffres $0_1$ et $0_2$ sont fournis à l'opérateur OB en codage DN, le résultat est fourni en codage DT ou DN (respectivement lignes $L_7$ et $L_8$ du tableau) selon que le mode de fonctionnement de la mémoire M est du type $T_I$ ou $T_{II}$. Lorsque les chiffres $0_1$ et $0_2$ reçus par l'opérateur OB sont codés en décimal transcodé (DT), le résultat $0_1 - 0_2$ est fourni en codage DT (ligne $L_9$ du tableau) ou DN (ligne $L_{10}$) selon que, de la même façon, la mémoire M a fonctionné en transcodage du type $T_I$ ou $T_{II}$.

Les dernières lignes du tableau ($L_{11}$ et $L_{12}$) représentent la fonction de conversion d'un chiffre représenté en héxadécimal en un nombre décimal. Cette opération nécessite deux sous-ensembles reliés de la façon décrite précédemment et repérés par a et b. Le premier dispositif (a) reçoit la valeur zéro sur l'une des entrées, $0_{2a}$ par exemple, le second reçoit le chiffre hexadécimal à convertir sur l'entrée $0_{2b}$. Ceci est représenté par la notation (0, $0_2$) dans la première colonne du tableau de la figure 3. Les autres entrées $0_{1a}$ et $0_{1b}$, dans l'exemple, reçoivent la constante 6, et les opérateurs effectuent l'opération d'addition demandée par la commande $C_{OB}$.

Le résultat final, noté ($0D_a$, $0D_b$), se trouvent respectivement codés en DT pour la ligne $L_{11}$ ou en DN pour la ligne $L_{12}$.

Le dispositif décrit ci-dessus permet donc de réaliser un certain nombre d'opérations, notamment addition ou soustraction, sur des nombres décimaux, exprimés selon des codes décimaux différents ainsi que de réaliser un certain nombre de transcodages, d'un code dans l'autre. Bien entendu, l'invention n'est pas limitée à l'exemple décrit et, en particulier, il est possible de faire varier le nombre de bits sur lequel sont exprimés les commandes et les chiffres d'entrée.

Ce dispositif additionneur et soustracteur décimal est susceptible de faire partie d'un opérateur décimal comprenant notamment un multiplicateur et un diviseur décimal, ce dernier pouvant comporter un dispositif d'estimation du quotient tel que décrit dans la demande de brevet français N° 79.19083 au nom de SEMS.

## REVENDICATIONS

1. Dispositif additionneur et soustracteur, caractérisé par le fait qu'il comporte au moins un opérateur binaire (OB) et une mémoire (M), l'opérateur binaire (OB) recevant des chiffres ($0_1$, $0_2$) exprimés sur un nombre déterminé de bits selon un code représentant un nombre binaire ou décimal, et réalisant une opération, définie par une commande extérieure ($C_{OB}$), sur les chiffres d'entrée, bit à bit ; la mémoire (M) recevant le résultat (S) fourni par l'opérateur binaire (OB) et fournissant sur commande extérieure ($C_1$, $C_2$) une valeur (R) qui est le résultat de l'opération précédente, exprimée sur un nombre déterminé de bits selon un code représentant un nombre binaire ou décimal.

2. Dispositif selon la revendication 1, caractérisé par le fait qu'il comporte une pluralité de sous-ensembles (B), chacun de ces sous-ensembles traitant deux chiffres décimaux appartenant respectivement à deux nombres décimaux, le dispositif comportant autant de sous-ensembles que les nombres à traiter comportent de chiffres, chacun des sous-ensembles comportant un opérateur binaire (OB) et une mémoire (M), l'opérateur binaire recevant en outre l'indication ($C_i$) de la retenue de l'étage précédent et fournissant à l'étage suivant l'indication ($C_0$) de la retenue des opérations qu'il effectue.

3. Dispositif selon la revendication 2, caractérisé par le fait que la mémoire (M) de chacun des sous-ensembles (B) reçoit l'indication ($E_i$) du bit de poids le plus faible du résultat (S) fourni par l'opérateur binaire (OB) de l'étage suivant, et fournit une valeur (R) qui est le décalage à droite d'une position binaire du nombre d'entrée.

4. Dispositif selon l'une des revendications précédentes, caractérisé par le fait que les mémoires (M) sont des mémoires mortes.

5. Opérateur décimal, caractérisé par le fait qu'il comporte un dispositif selon l'une des revendications précédentes.

FIG_1

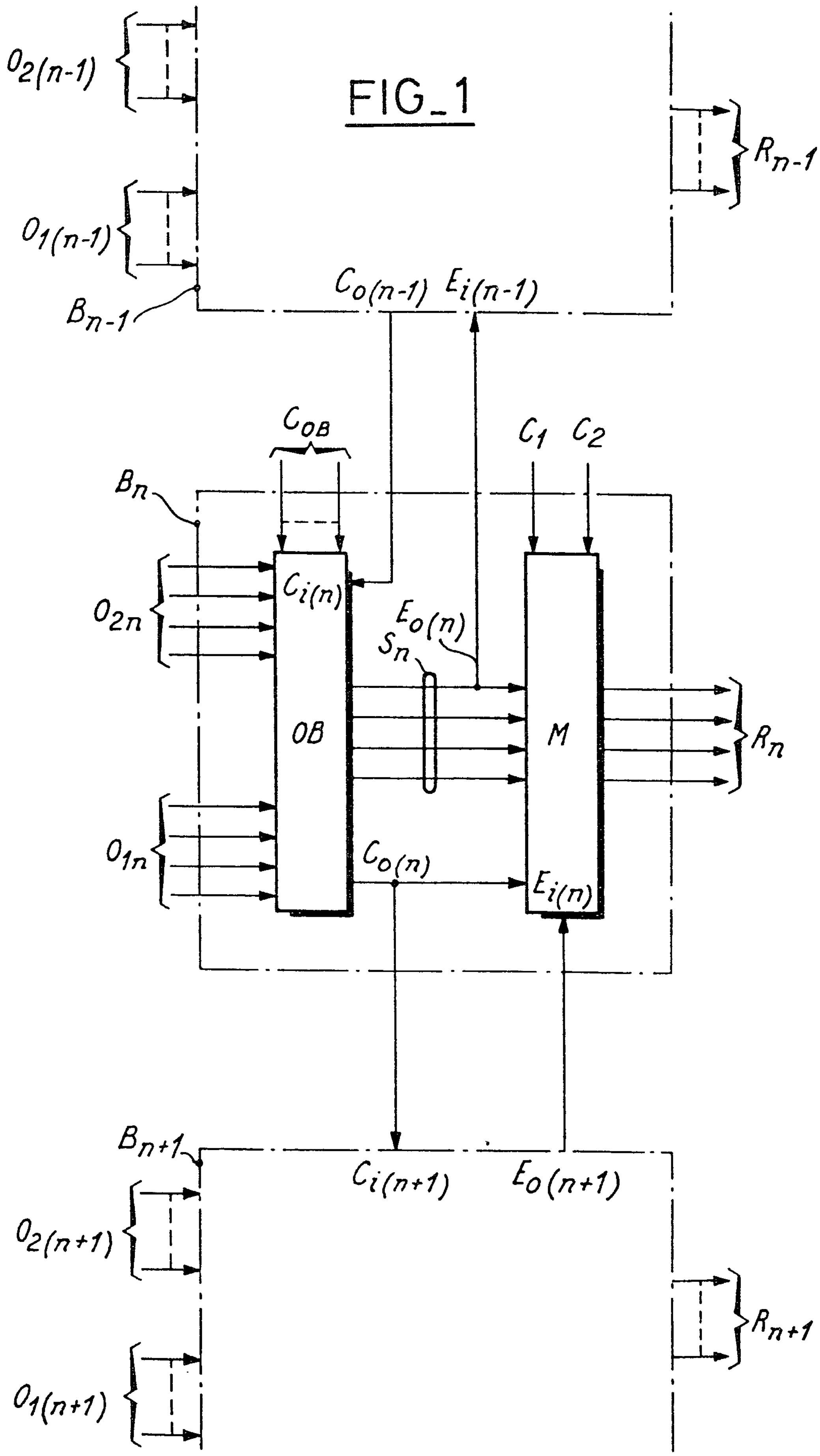

$O_{2(n-1)}$
$O_{1(n-1)}$
$B_{n-1}$
$R_{n-1}$
$C_{o(n-1)}$
$E_{i(n-1)}$
$C_{OB}$
$C_1$
$C_2$
$B_n$
$O_{2n}$
$C_{i(n)}$
$E_{o(n)}$
$S_n$
OB
M
$R_n$
$O_{1n}$
$C_{o(n)}$
$E_{i(n)}$
$B_{n+1}$
$C_{i(n+1)}$
$E_{o(n+1)}$
$O_{2(n+1)}$
$R_{n+1}$
$O_{1(n+1)}$

FIG. 2

| | $C_1$ | $C_2$ | $E_i$ | $C_0$ | S: 0 | 1 | 2 | 3 | 4 | 5 | 6 | 7 | 8 | 9 | A | B | C | D | E | F |
|---|---|---|---|---|---|---|---|---|---|---|---|---|---|---|---|---|---|---|---|---|
| $S_D$ | 0 | 0 | | | 0 | 1 | 2 | 3 | 4 | 5 | 6 | 7 | 8 | 9 | A | B | C | D | E | F |
| $D_D$ | 0 | 1 | 0 | | 0 | 0 | 1 | 1 | 2 | 2 | 3 | 3 | 4 | 4 | 5 | 5 | 6 | 6 | 7 | 7 |
| | 0 | 1 | 1 | | 8 | 8 | 9 | 9 | A | A | B | B | C | C | D | D | E | E | F | F |
| $T_I$ | 1 | 0 | | 0 | – | – | – | 0 | 1 | 2 | 3 | 4 | 5 | 6 | 7 | 8 | 9 | A | B | C |
| | 1 | 0 | | 1 | 3 | 4 | 5 | 6 | 7 | 8 | 9 | A | B | C | – | – | – | – | – | – |
| $T_{II}$ | 1 | 1 | | 0 | – | – | – | – | – | – | 0 | 1 | 2 | 3 | 4 | 5 | 6 | 7 | 8 | 9 |
| | 1 | 1 | | 1 | 0 | 1 | 2 | 3 | 4 | 5 | 6 | 7 | 8 | 9 | – | – | – | – | – | – |

FIG. 3

| | $C_{OB}$ | Codage de $O_1-O_2$ | Transcodage | R: VALEUR | R: CODAGE | |
|---|---|---|---|---|---|---|
| T | $O_2+6$ | DN | $T_I$ | $O_2$ | DT | $L_1$ |
| T | $O_2$ | DT | $T_I$ | $O_2$ | DN | $L_2$ |
| A | $O_1+O_2+6$ | DN | $T_I$ | $O_1+O_2$ | DT | $L_3$ |
| | | | $T_{II}$ | | DN | $L_4$ |
| A | $O_1+O_2$ | DT | $T_I$ | | DT | $L_5$ |
| | | | $T_{II}$ | | DN | $L_6$ |
| $S_T$ | $O_1-O_2$ | DN | $T_I$ | $O_1-O_2$ | DT | $L_7$ |
| | | | $T_{II}$ | | DN | $L_8$ |
| $S_T$ | $O_1-O_2$ | DT | $T_I$ | | DT | $L_9$ |
| | | | $T_{II}$ | | DN | $L_{10}$ |
| | $(O,O_2)+6$ | DN | $T_I$ | $OD_a, OD_b$ | DT | $L_{11}$ |
| | | | $T_{II}$ | | DN | $L_{12}$ |

0024232

Office européen des brevets

# RAPPORT DE RECHERCHE EUROPEENNE

Numero de la demande

EP 80 40 1143

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | US - A - 3 749 899 (HEWLETT PACKARD)<br>* Colonne 2, ligne 5 - colonne 4, ligne 12 *<br>-- | 1,4,5 | G 06 F 7/50 |
| | US - A - 4 001 567 (NATIONAL SEMICONDUCTOR)<br>* Figure 1; colonne 3, lignes 41-47; colonne 4, ligne 23 - colonne 8, ligne 23; colonne 10, ligne 26 - colonne 12, ligne 4 *<br>-- | 1 | DOMAINES TECHNIQUES RECHERCHES (Int. Cl. 3)<br>G 06 F 7/50 |
| | FR - A - 2 248 552 (VEREINIGTE FLUGTECHNISCHE WERKE - FOKKER)<br>* Figures 1,2; page 3, ligne 5 - page 4, ligne 26 *<br>---- | 1 | |

CATEGORIE DES DOCUMENTS CITES

- X particulièrement pertinent
- A: arrière-plan technologique
- O: divulgation non-ecrite
- P: document intercalaire
- T: théorie ou principe à la base de l'invention
- E: demande faisant interférence
- D: document cite dans la demande
- L: document cite pour d'autres raisons
- &: membre de la même famille, document correspondant

Le présent rapport de recherche a été établi pour toutes les revendications

| Lieu de la recherche | Date d'achèvement de la recherche | Examinateur |
|---|---|---|
| La Haye | 10-10-1980 | FORLEN |